# EUROPEAN PATENT APPLICATION

(11) **EP 4 797 415 A1**
(43) Date of publication of application: **26.08.2026**
(21) Application number: 26153792.2
(22) Date of filing: 23.01.2026
(51) Int. Cl.: H01M 50/342

(54) **RECHARGEABLE BATTERY AND METHOD OF MANUFACTURING RECHARGEABLE BATTERY**

(30) Priority: 25.02.2025 KR 20250024631
(71) Applicant: SAMSUNG SDI CO., LTD., Yongin-si, Gyeonggi-do 17084 (KR)
(72) Inventor: SHIN, Hojun, Yongin-si, Gyeonggi-do 17084 (KR); BAEK, Soomin, Yongin-si, Gyeonggi-do 17084 (KR); KIM, Sangwon, Yongin-si, Gyeonggi-do 17084 (KR)
(74) Representative: Gulde & Partner

(57) **Abstract**

A rechargeable battery includes: an electrode assembly; a can accommodating the electrode assembly in an internal space and including an opening at one side; and a cover portion coupled to the can at the opening, wherein the cover portion comprises a vent comprising metal, wherein the vent comprises a first region and a second region surrounding the first region, wherein the first region includes: a first portion extending in a first direction; and a second portion extending in a second direction intersecting the first direction and crossing the first portion at an intersection area, and wherein an average grain size of a microstructure of the metal in the first region is larger than an average grain size of a microstructure of the metal in the second region.

## Description

### BACKGROUND

### 1. Field

Aspects of some embodiments of the present disclosure relate to a rechargeable battery and a method of manufacturing a rechargeable battery.

### 2. Description of the Related Art

A rechargeable battery is a battery that, unlike a primary battery, repeatedly performs charging and discharging. Small-capacity rechargeable batteries are used in portable small electronic devices such as mobile phones, laptop computers, and camcorders, and large-capacity rechargeable batteries may be used as power sources for driving motors in hybrid vehicles and electric vehicles.

Rechargeable batteries may be classified as prismatic, cylindrical, pouch-type, or the like, according to their shape. Prismatic or cylindrical rechargeable batteries may be manufactured by inserting an electrode assembly having a negative plate, a positive plate, and a separator into an internal space of a can and then sealing it. A pouch-type battery may be manufactured by wrapping an electrode assembly with aluminum foil coated with an insulator.

A rechargeable battery may include a vent that may be deformed to discharge internal gas in case that internal pressure continuously increases.

The above information disclosed in this Background section is only for enhancement of understanding of the background and therefore the information discussed in this Background section does not necessarily constitute prior art.

### SUMMARY

This disclosure aims to provide a rechargeable battery and a method of manufacturing a rechargeable battery that may easily adjust the burst pressure of a vent.

However, the technical problems to be solved by this disclosure are not limited to the above-mentioned problems, and other problems not mentioned may be clearly understood by those skilled in the art from the description set forth below.

According to some embodiments of the present disclosure for solving the technical problem, a rechargeable battery includes an electrode assembly, a can accommodating the electrode assembly in an internal space and including an opening at one side, and a cover portion coupled to the can at the opening, wherein the cover portion includes a vent comprising metal, and the vent includes a first region and a second region surrounding the first region, wherein the first region includes a first portion extending in a first direction, and a second portion extending in a second direction intersecting the first direction and crossing the first portion at an intersection area, and wherein an average grain size of a microstructure of the metal in the first region is larger than an average grain size of a microstructure of the metal in the second region.

According to some embodiments, the metal may be steel.

According to some embodiments, the microstructure of the metal in the first region and/or the microstructure of the metal in the second region may be austenitic structure. As example, an austenitic structure facilitates modifying the metal, e.g., the average grain size, a tensile strength and/or elongation strength thereof. This contributes to adjusting the burst pressure of the vent.

According to some embodiments, the first region may include a third portion extending in a third direction intersecting the first direction and/or the second direction, respectively, and crossing the first portion and/or the second portion at the intersection area. This contributes to adjusting the burst pressure of the vent.

According to some embodiments, the vent may include a notch portion on a first surface facing the electrode assembly. This contributes to adjusting the burst pressure of the vent.

According to some embodiments, the first region and the notch portion may be adjacent to each other. This contributes to adjusting the burst pressure of the vent.

According to some embodiments, the vent may include a second surface opposite to the first surface, and, preferably, the second surface may include a groove portion. This contributes to adjusting the burst pressure of the vent.

According to some embodiments, the groove portion may include a first groove extending in the first direction, and/or a second groove extending in the second direction and preferably crossing the first groove. This contributes to adjusting the burst pressure of the vent.

According to some embodiments, the first region and the groove portion may be adjacent to each other. This contributes to adjusting the burst pressure of the vent.

According to some embodiments, the notch portion may include a first notch extending in the first direction, and preferably a second notch extending in the second direction from an end portion of the first notch. This contributes to adjusting the burst pressure of the vent.

According to some embodiments, the notch portion and the groove portion may overlap. This contributes to adjusting the burst pressure of the vent.

According to some embodiments, the first region may be a laser beam heat-affected zone where, preferably, the microstructure of the metal has been coarsened by laser beam irradiation. This contributes to adjusting the burst pressure of the vent.

According to some embodiments of the present disclosure for solving the technical problem, a method of manufacturing a rechargeable battery includes preparing a vent comprising metal, irradiating the vent with a laser beam to increase an average grain size of a microstructure of the metal, coupling the vent to a cover portion, accommodating an electrode assembly in an internal space of a can, and coupling the cover portion to an opening of the can.

According to some embodiments, the microstructure of the metal may be austenitic structure.

According to some embodiments, in case that irradiating the vent with a laser beam to increase the average grain size of the microstructure of the metal, the laser beam may be irradiated in a first direction and a second direction intersecting the first direction, and may be irradiated overlappingly in a partial area.

According to some embodiments, in case that irradiating the vent with a laser beam to increase the average grain size of the microstructure of the metal, the laser beam may be irradiated in a third direction intersecting the first direction and the second direction, respectively, and may be irradiated overlappingly in the partial area.

According to some embodiments, the vent may include a notch portion.

According to some embodiments, the notch portion may be located on a first surface of the vent, and, preferably, in case that irradiating the vent with a laser beam to increase the average grain size of the microstructure of the metal, the laser beam may be irradiated on a second surface opposite to the first surface of the vent.

According to some embodiments, in case that coupling the cover portion to the opening of the can, the first surface of the vent may be arranged to face the electrode assembly.

According to some embodiments, in a rechargeable battery, the burst pressure of the vent can be relatively easily adjusted.

However, the characteristics of embodiments according to the present disclosure are not limited to the characteristics described above, and other technical characteristics not mentioned may be more clearly understood by those skilled in the art from the description set forth below.

### BRIEF DESCRIPTION OF THE DRAWINGS

The following drawings attached to this specification illustrate aspects of some embodiments of the present disclosure and, together with the detailed description of the disclosure that follows, serve to further the understanding of the technical concept of the present disclosure. Therefore, the present disclosure should not be interpreted as being limited only to the matters shown in such drawings.
FIG. 1 is a perspective view schematically showing a rechargeable battery according to some embodiments.
FIG. 2 is a cross-sectional view taken along the line II-II' of the rechargeable battery shown in FIG. 1.
FIG. 3 is a plan view showing a vent included in a rechargeable battery according to some embodiments.
FIG. 4 is a photograph of a second surface of a vent including a first region.
FIG. 5 is a cross-sectional photograph of a vent before laser beam heat treatment.
FIG. 6 is a cross-sectional photograph of a vent after laser beam heat treatment.
FIG. 7 is a plan view schematically showing a vent with a groove portion formed thereon.
FIG. 8 is a photograph of the measured thickness of a vent before laser beam heat treatment.
FIG. 9 is a photograph of the measured thickness of a vent after laser beam heat treatment.
FIG. 10 is a perspective view schematically showing a rechargeable battery according to some embodiments.
FIG. 11 is a cross-sectional view taken along the line XI-XI' of the rechargeable battery shown in FIG. 10.

### DETAILED DESCRIPTION

Hereinafter, aspects of some embodiments of this disclosure will be described in detail with reference to the accompanying drawings. Prior to this, terms or words used in the specification and claims should not be interpreted as being limited to ordinary or dictionary meanings, and should be interpreted as having meanings and concepts that are consistent with the technical idea of the present disclosure, based on the principle that an inventor may appropriately define the concepts of terms to explain his or her disclosure in the best way.

Therefore, it should be understood that the embodiments described in this specification and the configurations shown in the drawings are merely aspects of some embodiments of this disclosure and do not represent all of the technical ideas of the present disclosure, and that various equivalents and modifications thereof that may replace them may exist at the time of filing this application.

Also, when used in this specification, the terms "comprise, include" and/or "comprising, including" specify the presence of stated features, numbers, steps, operations, members, elements, and/or groups thereof, and do not preclude the presence or addition of one or more other features, numbers, operations, members, elements, and/or groups thereof. Also, when describing embodiments of this disclosure, "may" can include "one or more embodiments of this disclosure."

Also, to aid understanding of the disclosure, the attached drawings are not shown to actual scale, and the dimensions of some components may be exaggerated. Also, the same reference numbers may be assigned to the same components in different embodiments.

A mention that two comparison targets are 'identical' means that they are 'substantially identical.' Therefore, substantial identity may include cases with deviations considered low in the art, for example, deviations of less than 5%. Also, in case that a parameter is uniform in a certain region, it may mean that it is uniform from an average perspective.

Although first, second, and the like are used to describe various components, these components are not limited by these terms. These terms are used merely to distinguish one component from another component, and unless specifically stated otherwise, a first component may also be a second component.

Throughout the specification, unless specifically stated otherwise, each component may be singular or plural.

In case that it is stated that any configuration is arranged on the "upper (or lower) part" or "above (or below)" a component, it may mean not only that any configuration is arranged in contact with the upper (or lower) surface of the component, but also that another configuration may be interposed between the component and any configuration arranged above (or below) the component.

Also, in case that it is stated that one component is "connected," "coupled," or "contacted" to another component, it should be understood that the components may be directly connected or connected to each other, but another component may be "interposed" between the components, or each component may be "connected," "coupled," or "contacted" through another component. Also, in case that one part is electrically coupled to another part, this includes not only cases where they are directly connected, but also cases where they are connected with other elements interposed between them.

Throughout the specification, in case that it is stated "A and/or B", it means, unless specifically stated otherwise, A, B, or A and B. That is, "and/or" includes all combinations or any combination of multiple items listed. In case that it is stated "C to D", it means, unless specifically stated otherwise, equal to or greater than C and equal to or less than D.

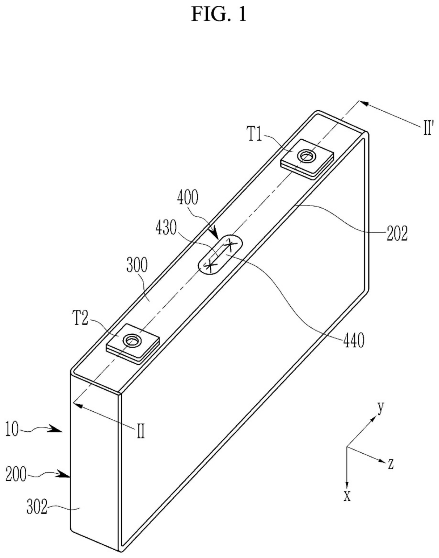

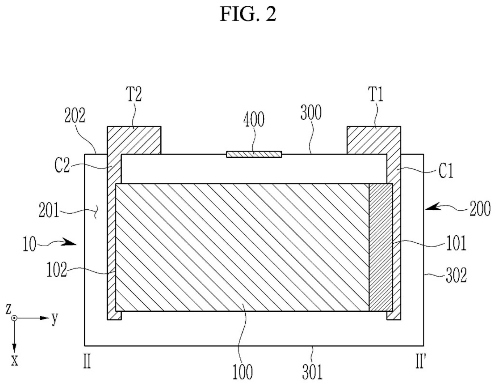

Hereinafter, a rechargeable battery according to some embodiments will be described in more detail. FIG. 1 is a perspective view schematically showing a rechargeable battery according to some embodiments. FIG. 2 is a cross-sectional view taken along the line II-II' of the rechargeable battery shown in FIG. 1.

The rechargeable battery 10 may include an electrode assembly 100, a can 200, a cover portion 300, a negative terminal T1, a positive terminal T2, a first current collector C1, and a second current collector C2. The rechargeable battery 10 may be a prismatic rechargeable battery.

The electrode assembly 100 may be formed by stacking or winding a negative plate, a positive plate, and a separator formed in a thin plate or film shape. The electrode assembly 100 enables charging and discharging of the rechargeable battery through electrochemical reactions of the electrolyte.

The negative plate may be formed by coating a negative active material such as graphite or carbon on a negative substrate formed of a metal foil such as copper, copper alloy, nickel, or nickel alloy. A negative uncoated portion, where the negative active material is not coated, may be formed in a part of the negative substrate, and a negative tab 101 may be formed on the negative uncoated portion. The negative tab 101 may be formed to face one side along the longitudinal direction of the electrode assembly 100. The longitudinal direction of the electrode assembly 100 may be the y-axis direction in the figure.

The positive plate may be formed by coating a positive active material such as a transition metal oxide on a positive substrate formed of a metal foil such as aluminum or aluminum alloy. A positive uncoated portion, where the positive active material is not coated, may be formed in a part of the positive substrate, and a positive tab 102 may be formed on the positive uncoated portion. The positive tab 102 may be formed to face the other side along the longitudinal direction of the electrode assembly 100. That is, the negative tab 101 and the positive tab 102 may be formed at each end to face opposite directions along the longitudinal direction of the electrode assembly 100.

The separator may be positioned between the negative plate and the positive plate to prevent or reduce shorts and enable the movement of lithium ions. The separator may be made of polyethylene, polypropylene, a composite film of polyethylene and polypropylene, or the like, but is not limited thereto.

The can 200 may accommodate the electrode assembly 100 together with an electrolyte in an internal space 201. The can 200 may have a rectangular parallelepiped shape. For example, the can 200 may include a bottom portion 301 and two pairs of side portions 302. The bottom portion 301 and the side portions 302 may each have a rectangular shape. However, the shape of the can 200 is not limited to a rectangular parallelepiped shape.

The bottom portion 301 may be arranged facing the opening 202 of the can 200 in the x-axis direction. One pair of side portions 302 may be arranged facing each other in the y-axis direction. Another pair of side portions 302 may be arranged facing each other in the z-axis direction.

The y-axis direction may be the longitudinal direction of the rechargeable battery 10. The x-axis direction may be a direction intersecting the y-axis direction. The z-axis direction may be a direction intersecting the x-axis direction and the y-axis direction, respectively.

The can 200 may include, e.g., be formed of, metal. For example, the can 200 may include, e.g., be formed of, a conductive metal such as, for example, aluminum, aluminum alloy, and/or nickel-plated steel, or a mixture thereof.

The cover portion 300 may be assembled to the opening 202 of the can 200 to seal the can 200 and allow current generated from the electrode assembly 100 to flow to an external device. The cover portion 300 may include a vent 400 to prevent or reduce explosion of the rechargeable battery 10.

The negative terminal T1 and the positive terminal T2 may be contact points connected to an external circuit of the rechargeable battery 10. The negative terminal T1 may be electrically connected to the negative tab 101 through a first current collector C1 inside the rechargeable battery 10. The positive terminal T2 may be electrically connected to the positive tab 102 through a second current collector C2 inside the rechargeable battery 10.

The negative terminal T1 and the positive terminal T2 may be formed on one side of the cover portion 300. FIGS. 1 and 2 show the negative terminal T1 and the positive terminal T2 formed on the cover portion 300, but the locations where the negative terminal T1 and the positive terminal T2 are formed are not limited to the cover portion 300. For example, the negative terminal T1 and the positive terminal T2 may be located on one pair of different side portions 302 facing each other.

The negative terminal T1 and the positive terminal T2 may be formed of metal. For example, the negative terminal T1 may be made of copper or copper alloy. The positive terminal T2 may be made of aluminum or aluminum alloy.

The first current collector C1 and the second current collector C2 may include, e.g., be formed of, metal. For example, the first current collector C1 may include, e.g., be made of, copper or copper alloy. Alternatively or additionally, the second current collector C2 may include, e.g., be made of, aluminum or aluminum alloy.

The vent 400 formed on the cover portion 300 may be deformed to discharge internal gas in case that the internal pressure of the rechargeable battery 10 continuously increases. The vent 400 may serve as a safety device for the rechargeable battery 10. The vent 400 may prevent or reduce instances of the rechargeable battery 10 exploding due to overcharging, over-discharging, external impact, or the like.

FIGS. 1 and 2 show the vent 400 formed on the cover portion 300, but the location where the vent 400 is formed is not limited to the cover portion 300. For example, the vent 400 may be formed on the bottom portion 301 of the can 200 facing the cover portion 300.

The rechargeable battery 10 may be manufactured by a process of accommodating the electrode assembly 100 in the internal space 201 of the can 200, and coupling the cover portion 300 with the vent 400 coupled thereto to the opening 202 of the can 200.

The vent 400 may include metal. For example, the metal of the vent 400 may be aluminum, aluminum alloy, and/or steel. For example, in case that manufacturing the vent 400 using steel, there is an advantage that the strength of the vent 400 can be increased, and costs can be reduced compared to manufacturing the vent 400 using aluminum.

In case that manufacturing a vent, it may be desirable to precisely adjust the burst pressure of the vent 400. The burst pressure may refer to a pressure value set to relieve internal pressure by deforming the vent 400 in case that abnormal pressure increase occurs inside the rechargeable battery 10. That is, in case that the internal pressure of the rechargeable battery 10 reaches the burst pressure, the vent 400 may be deformed. The burst pressure of the vent 400 may be more than 5 bar (e.g., than 10 bar, e.g., than 12.5 bar, e.g., than 13 bar) and/or less than 50 bar (e.g., than 25 bar, e.g., than 20 bar, e.g., than 17 bar). In some embodiments, the burst pressure of the vent 400 may be set in a range of 12.5 bar to 20 bar, for example, in a range of 13 bar to 17 bar.

To adjust the burst pressure of the vent 400, surface heat treatment may be performed by irradiating the surface of the vent 400 with a laser beam to increase the average grain size of the metal microstructure. That is, to adjust the burst pressure of the vent 400, an area where the microstructure of the metal is coarsened may be formed on the vent 400 using a laser beam. An area where the average grain size of the metal microstructure is increased may have reduced tensile strength and/or elongation strength. Using this, the burst pressure of the vent 400 may be set lower.

The intensity of the laser beam may be adjusted in a certain range. The intensity of the laser beam may be greater than or equal to an intensity that can increase the average grain size of the metal microstructure. Also, the intensity of the laser beam may be less than an intensity that can penetrate the vent 400.

In case that the laser beam is irradiated, a first region 430 may be formed on the vent 400.

The first region 430 may be an area where the average grain size of the metal microstructure has increased due to laser beam irradiation. The first region 430 may be a laser beam heat-affected zone where the microstructure of the metal has been coarsened by laser beam irradiation.

The second region 440 may be an area surrounding the first region 430. The second region 440 may be an area not affected by laser beam irradiation.

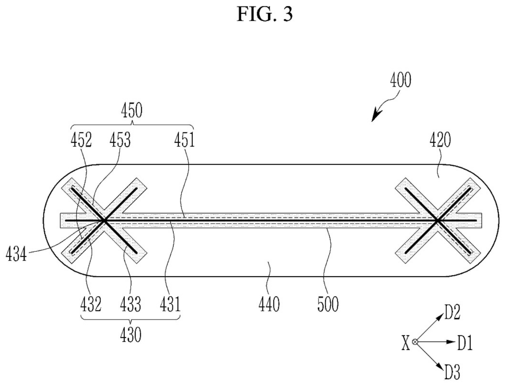

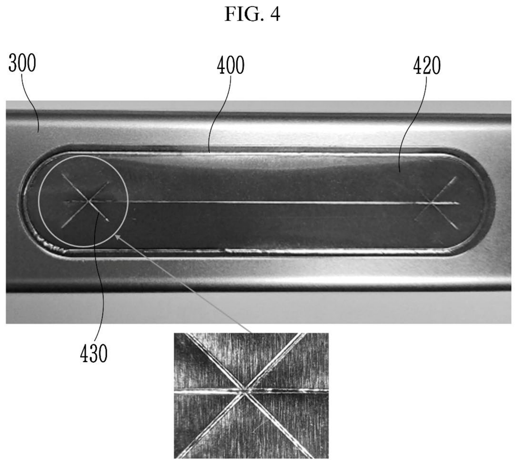

Hereinafter, the first region formed on the vent will be described in more detail with reference to FIGS. 3 and 4. FIG. 3 is a plan view showing a vent included in a rechargeable battery according to some embodiments. FIG. 4 is a photograph of a second surface of a vent including a first region.

One surface of the vent 400 may include a first region 430 and a second region 440. The first region 430 may be an area where the average grain size of the metal microstructure has increased due to laser beam irradiation. The second region 440 may be an area surrounding the first region 430. The second region 440 may be an area where the average grain size of the metal microstructure has not increased because it has not been affected by laser beam irradiation. That is, the second region 440 may be an area where the microstructure of the metal has not been coarsened because it has not been affected by laser beam irradiation. The average grain size of the microstructure of the metal in the first region 430 may be larger than the average grain size of the microstructure of the metal in the second region 440.

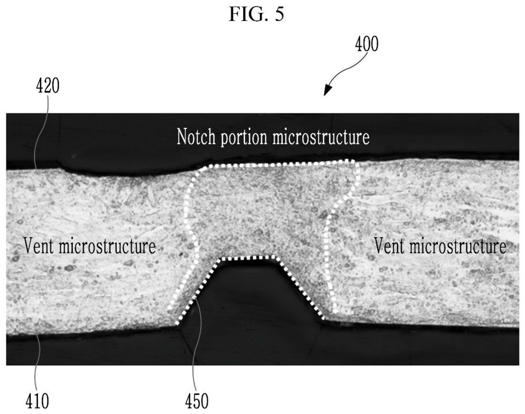

The vent 400 may include a first surface (see FIGS. 5 to 8) and a second surface 420 on the opposite side of the first surface. For example, the first surface may be a surface facing the electrode assembly toward the inside of the can. The second surface 420 may be a surface facing the outside of the can.

FIG. 3 is a plan view showing the second surface 420 of the vent 400. FIG. 3 shows the first region 430 formed on the second surface 420 of the vent 400 by laser beam irradiation, but the surface of the vent 400 to which the laser beam is irradiated is not limited thereto. For example, the laser beam may be irradiated on the first surface 410 of the vent 400.

A notch portion 450 may be formed on one surface of the vent 400 to adjust the burst pressure of the vent 400. The notch portion 450 may be a groove formed in a specific pattern. For example, the notch portion 450 may be a Y-shaped groove. The burst pressure of the vent 400 may be lowered by including the notch portion 450. Also, the burst pressure of the vent 400 may be precisely adjusted by adjusting the groove depth or pattern shape of the notch portion 450. Also, the notch portion 450 may guide the deformation of the vent 400 for pressure relief to occur at a specific location.

The notch portion 450 may be formed on the first surface of the vent 400. The first surface may be a surface facing the electrode assembly in case that the vent 400 is coupled to the can. In case that coupling the vent 400 to one side of the can, the first surface of the vent 400 may be arranged to face the electrode assembly. FIG. 3 shows the notch portion 450 formed on the first surface of the vent 400, but the surface of the vent 400 on which the notch portion 450 is formed is not limited to the first surface 410. For example, the notch portion 450 may be formed on the second surface 420 of the vent 400. The second surface 420 may be a surface located on the opposite side of the first surface.

The notch portion 450 may include a first notch 451 extending in a first direction D1. Also, the notch portion 450 may include a second notch 452 extending in a second direction D2 from the first direction D1 end portion of the first notch 451. Also, the notch portion 450 may include a third notch 453 extending in a third direction D3 from the first direction D1 end portion of the first notch 451.

The first direction D1, the second direction D2, and the third direction D3 may extend intersecting each other in different directions on the plane of one surface of the vent 400. FIG. 3 shows that the first direction D1 is aligned with the longitudinal direction of the vent 400, but this is for example and not limited thereto. Also, FIG. 3 shows that the second direction D2 and the first direction D1 form an angle of 45° (or about 45°), but this is for example and not limited thereto. Also, FIG. 3 shows that the third direction D3 forms an angle of 45° (or about 45°) with the first direction D1 and an angle of 90° (or about 90°) with the second direction D2, but this is for example and embodiments according to the present disclosure are not limited thereto.

The laser beam irradiation possible area 500 shown in FIG. 3 represents a virtual area where a laser beam may be irradiated. The laser beam may be irradiated in the laser beam irradiation possible area 500. For example, the laser beam irradiation possible area 500 may be formed corresponding to the shape of the notch portion 450. Thus, in addition to the burst pressure reduction of the vent 400 by the notch portion 450, an additional burst pressure reduction effect of the vent 400 due to laser beam irradiation heat treatment may occur.

The laser beam irradiation possible area 500 may be a virtual area formed on the first surface or the second surface 420 of the vent 400.

The laser beam may be irradiated in one of the first direction D1, the second direction D2, or the third direction D3 in the laser beam irradiation possible area 500.

Alternatively, a laser beam may be irradiated in the first direction D1 and the second direction D2 in the laser beam irradiation possible area 500. Also, a laser beam may be irradiated in the second direction D2 and the third direction D3 in the laser beam irradiation possible area 500. Also, a laser beam may be irradiated in the first direction D1 and the third direction D3 in the laser beam irradiation possible area 500. Laser beams applied in different directions may overlap in a partial area. The partial area may be the intersection area 434.

Alternatively, the laser beam may be irradiated in the first direction D1, the second direction D2, and the third direction D3 in the laser beam irradiation possible area 500. Laser beams applied in different directions may overlap in a partial area. The partial area may be the intersection area 434.

The intersection area 434 may be an area where the laser beam is irradiated overlappingly, e.g., being irradiated multiple times. The intersection area 434 may be a part where the thermal energy generated during laser beam irradiation is concentrated, e.g., aggregated. The intersection area 434 may receive higher thermal energy than an area where the laser beam is irradiated once. Due to the overlapping laser beam irradiation in the intersection area 434, the properties of the vent 400 may be changed more significantly. That is, in the intersection area 434, the average grain size of the metal microstructure may be further increased due to the overlapping laser beam irradiation, and the tensile strength and elongation strength may be reduced.

A first region 430 may be formed on one surface of the vent 400 by laser beam irradiation. FIG. 3 shows the first region 430 formed on the second surface 420, but the area where the first region 430 is formed is not limited to the second surface 420. For example, the laser beam may be irradiated on the first surface 410 to form the first region 430 on the first surface 410.

The first region 430 may include one or more of a first portion 431, a second portion 432, and a third portion 433.

The first portion 431 may be a part of the first region 430 extending in the first direction D1.

The second portion 432 may be a part of the first region 430 extending in the second direction D2 and crossing the first portion 431 at an intersection area 434. The intersection area 434 may be an area where the first portion 431 and the second portion 432 overlap each other.

The third portion 433 may be a part of the first region 430 extending in the third direction D3 and crossing the first portion 431 and the second portion 432 at the intersection area 434. The intersection area 434 may be an area where the first portion 431, the second portion 432, and the third portion 433 overlap each other.

Because steel has a relatively high strength, it may be difficult to form a thin groove thickness of the notch portion 450 of the vent 400 including steel. Also, because the vent 400 including steel has a relatively high strength, it may not be easily deformed even if it includes the notch portion 450. That is, even if the groove thickness of the notch portion 450 is set very thin, the burst pressure of the vent 400 including steel may be set high.

In a rechargeable battery according to some embodiments, the tensile strength and elongation strength of the vent 400 may be reduced by increasing the average grain size of the metal microstructure of the first region 430. This may reduce the burst pressure of the vent 400. That is, the burst pressure of the vent 400 may be easily adjusted.

A rechargeable battery according to some embodiments may include both the notch portion 450 and the first region 430. Thus, in addition to the burst pressure reduction effect by the first region 430, burst pressure reduction by the notch portion 450 may additionally occur. By forming the first region 430 to correspond to the shape of the notch portion 450, the burst pressure of the vent 400 may be adjusted more easily.

Burst pressure adjustment through the formation of the first region 430 may be applied not only to steel but also to vents 400 made of other metals.

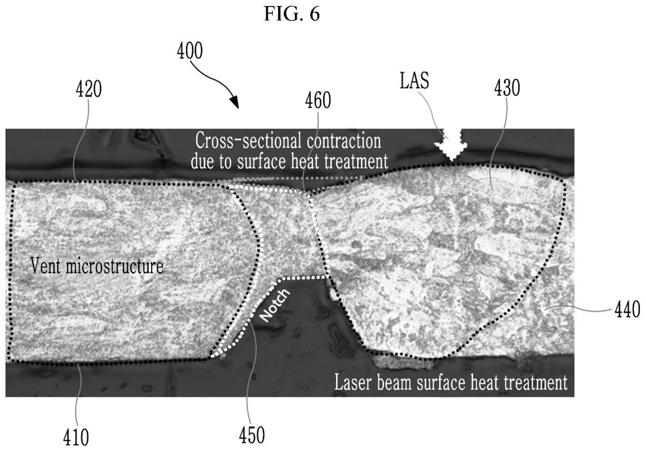

Hereinafter, the vent before and after laser beam heat treatment will be compared and described with reference to FIGS. 5 and 6. FIG. 5 is a cross-sectional photograph of a vent before laser beam heat treatment. FIG. 6 is a cross-sectional photograph of a vent after laser beam heat treatment.

FIGS. 5 and 6 show a cross-section of a vent 400 including steel. The microstructure of the metal in the first region 430 and the microstructure of the metal in the second region 440 may be austenitic structure. FIG. 6 shows that the average grain size of the austenitic structure has increased in the area where the laser beam LAS has been irradiated.

In this disclosure, the average grain size may refer to the crystal grain diameter corresponding to the median (D50) of the total particle size in the grain size distribution of the metal structure. The grain size distribution may represent the size distribution of crystal grains in the metal structure. The median (D50) may refer to the diameter of the crystal grain corresponding to the 50% position in case that all crystal grains are arranged in order of size. In other words, the average grain size may be the crystal grain diameter where 50% of all crystal grains in the metal structure are smaller than this in case that arranged in order of size, and 50% are equal to or larger than this.

The crystal grain diameter may be a value that can represent the overall size of a crystal grain. For example, the crystal grain diameter may be the average value of diameters in various directions of a crystal grain seen in a two-dimensional cross-section. Alternatively, the diameter of a crystal grain may be defined as the spherical diameter in case that the crystal grain is assumed to be spherical. Alternatively, the diameter of a crystal grain may be the average of the lengths intersecting the crystal grain by drawing lines in various directions using the line segment method.

FIGS. 5 and 6 show a cross-section of a vent 400 including a notch portion 450. FIG. 6 shows that the laser beam LAS has been irradiated on the second surface 420 of the vent 400. FIG. 6 shows the position where the laser beam LAS has been irradiated and the position where the first region 430 has been formed. The laser beam LAS may be irradiated adjacent to the notch portion 450. Thus, the first region 430 and the notch portion 450 may be adjacent to each other. FIG. 6 shows the first region 430 adjacent to the notch portion 450. The position where the laser beam LAS is irradiated may be a part of the laser beam irradiation possible area.

Heat treatment effects may occur on the surface of the vent 400 where the laser beam LAS is irradiated. The thermal energy generated by the laser beam LAS irradiation may affect the microstructure of the metal, further increasing the grain size. Also, the rapid heating and cooling that occurs during the laser beam LAS irradiation process may promote recrystallization of the metal microstructure, which may be a major cause of grain growth. In case that the laser beam LAS is irradiated, thermal stress may occur in the irradiated area and its surroundings, causing cross-sectional contraction of the vent 400. This cross-sectional contraction may occur not only in the area directly irradiated by the laser beam but also in its surroundings. Local deformation due to thermal stress may form a groove portion 460 on the laser beam-irradiated surface and its surroundings.

The groove portion 460 may cause structural discontinuity of the vent 400 and act as a stress concentration area. Changes in microstructure and cross-sectional contraction due to laser beam irradiation may affect the mechanical properties of the vent 400. The burst pressure of the vent 400 may be reduced due to cross-sectional contraction occurring in a part of the vent 400.

The groove portion 460 may be formed on a surface where the laser beam LAS is irradiated.

In case that the laser beam LAS is irradiated on the first surface 410, a groove portion may be formed on the first surface 410. In this case, a groove portion may be created on the notch portion 450, or the depth or width of the notch portion 450 may be further expanded.

In case that the laser beam LAS is irradiated on the second surface 420, a groove portion 460 may be formed on the second surface 420. FIG. 6 shows the groove portion 460 formed on the second surface 420. The groove portion 460 may be formed adjacent to the first region 430. In case that the notch portion 450 is located on the first surface 410 of the vent 400, the laser beam LAS may be irradiated on the second surface 420 opposite to the first surface 410 of the vent 400.

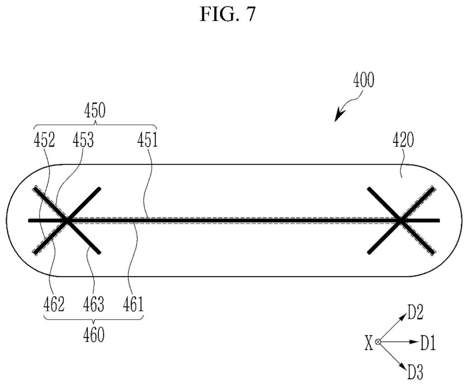

Hereinafter, a vent with a groove portion formed thereon will be described in detail with reference to FIG. 7. FIG. 7 is a plan view schematically showing a vent with a groove portion formed thereon.

FIG. 7 shows the groove portion 460 and the notch portion 450, which are components of the vent 400, and does not show other components of the vent 400. For example, the first region of the vent 400 is omitted. Some description of the same components explained earlier may be omitted.

The groove portion 460 may be formed corresponding to the shape of the first region. The groove portion 460 may be formed adjacent to the first region. The groove portion 460 may be formed overlapping with the notch portion 450. Alternatively, the groove portion 460 may be formed adjacent to the notch portion 450.

The groove portion 460 may include a first groove 461, a second groove 462, and a third groove 463.

The first groove 461 may be a part of the groove portion 460 extending in the first direction D1. The first groove 461 may be formed together during the process of forming the first portion of the first region.

The second groove 462 may be a part of the groove portion 460 extending in the second direction D2. The second groove 462 may be formed crossing the first groove 461. The second groove 462 may be formed together during the process of forming the second portion of the first region.

The third groove 463 may be a part of the groove portion 460 extending in the third direction D3. The third groove 463 may be formed crossing the area where the first groove 461 and the second groove 462 overlap. The third groove 463 may be formed together during the process of forming the third portion of the first region.

The groove portion 460 in FIG. 7 is for example, and the shape of the groove portion 460 is not limited thereto.

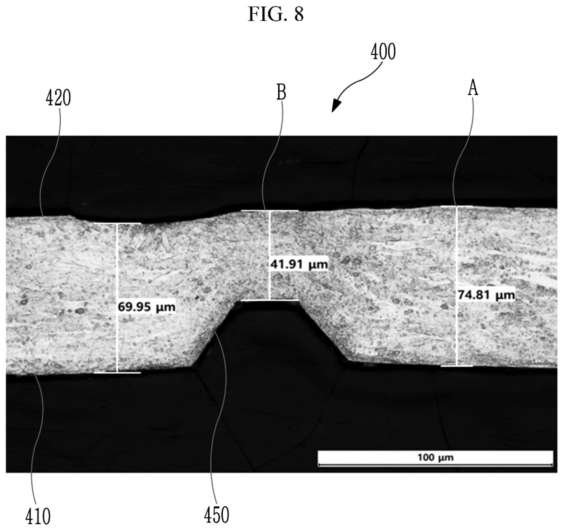

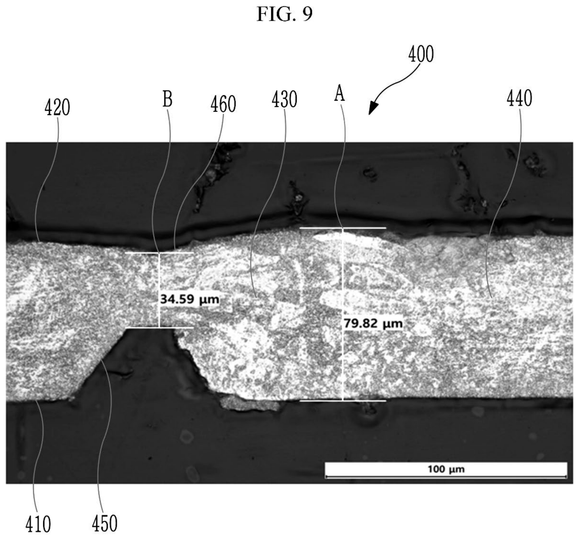

Hereinafter, the change in thickness of the vent before and after laser beam heat treatment will be described with reference to FIGS. 8 and 9. FIG. 8 is a photograph of the measured thickness of a vent before laser beam heat treatment. FIG. 9 is a photograph of the measured thickness of a vent after laser beam heat treatment.

In case that the laser beam is irradiated, the cross-section of the vent 400 may contract due to thermal stress occurring in the irradiated area and its surroundings. Due to this contraction, the thickness may decrease in some parts of the vent 400, and the thickness of the vent 400 may increase in adjacent parts.

Referring to FIG. 8, the thickness of area A, where laser beam irradiation is scheduled, is 74.81 *µ*m, and the thickness of area B, which is the notch portion 450, is 41.91 *µ*m. Referring to FIG. 9, the thickness of area A, which has been laser beam-irradiated and heat-treated, is 79.82 *µ*m, and the thickness of area B, which is the notch portion 450, is 34.59 *µ*m. Thus, it can be confirmed that a groove portion 460 has formed on the opposite surface of the notch portion 450. It can be confirmed that the thickness of area B, which is the notch portion 450, has decreased by 17% (or about 17%). Also, it can be confirmed that the thickness of area A, where the laser beam has been irradiated, has increased by 6.6% (or about 6.6%).

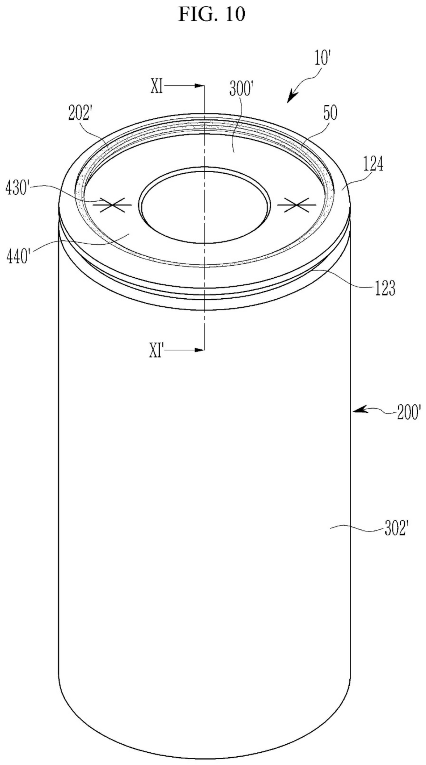

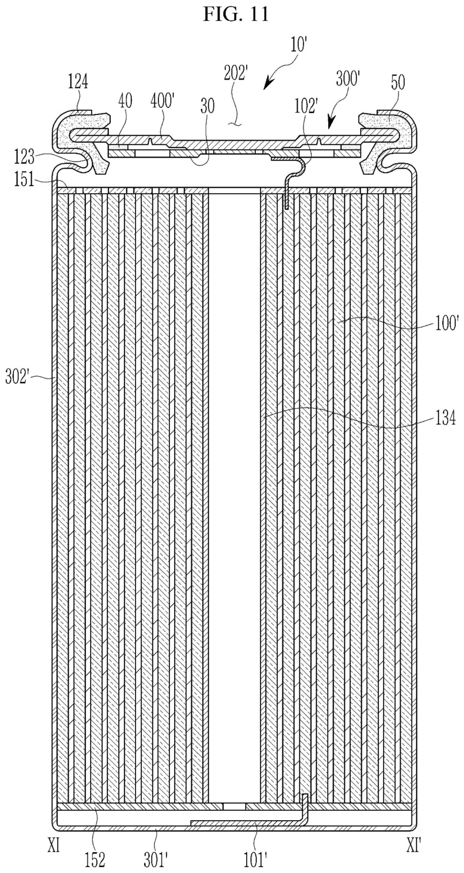

Hereinafter, embodiments of a rechargeable battery to which a vent with a first region formed thereon may be applied will be described with reference to FIGS. 10 and 11. FIG. 10 is a perspective view schematically showing a rechargeable battery according to some embodiments. FIG. 11 is a cross-sectional view taken along the line XI-XI' of the rechargeable battery shown in FIG. 10.

A rechargeable battery 10' according to some embodiments may be cylindrical. The cylindrical rechargeable battery 10' may include a can 200', an electrode assembly 100' accommodated inside the can 200', and a cover portion 300' assembled to an opening 202' of the can 200' to seal the can 200'. The cover portion 300' may include a vent 400' that prevents or reduces instances of explosion of the rechargeable battery 10'. The vent 400' may be referred to as a current interruptive device (CID).

The can 200' may include a bottom portion 301' and a side portion 302'. The bottom portion 301' may be a circular plate, and the side portion 302' may be cylindrical. During the manufacturing process of the rechargeable battery 10', one side (upper side) of the can 200' is open, and the electrode assembly 100' may be accommodated inside the can 200' together with an electrolyte. The can 200' may be made of steel, steel alloy, aluminum, aluminum alloy, or the like.

A beading portion 123 and a crimping portion 124 may be located on the side portion 302' of the can 200'. The beading portion 123 is a part concavely deformed toward the inside of the can 200', and the crimping portion 124 is a part where the edge of the side portion 302' is bent toward the center of the cover portion 300'. The movement of the electrode assembly 100' may be restricted by the beading portion 123, and the cover portion 300' may be fixed to the can 200' by the crimping portion 124.

The electrode assembly 100' may include a positive plate, a negative plate, and a separator. The positive plate may include a positive substrate and a positive active material layer located on the positive substrate. The negative plate may include a negative substrate and a negative active material layer located on the negative substrate. The positive substrate may include aluminum foil, and the positive active material may include transition metal oxides such as LiCoO2, LiNiO2, LiMn2O4, or the like. The negative substrate may include copper foil or nickel foil, and the like, and the negative active material may include graphite or carbon, and the like.

The separator may insulate the positive plate and the negative plate while allowing the movement of lithium ions. The separator may include polyethylene or polypropylene, and the like.

The positive plate, negative plate, and separator may be wound in an approximately cylindrical form, and a cylindrical center pin 134 may be located at the center of the electrode assembly 100'. The center pin 134 suppresses deformation of the electrode assembly 100' during the charging and discharging process of the rechargeable battery 10' and may act as a passage for gas generated inside the rechargeable battery 10'. The center pin 134 may be omitted in some cases.

The positive plate may include a positive tab 102' attached to the positive substrate, and the negative plate may include a negative tab 101' attached to the negative substrate. The positive tab 102' and the negative tab 101' may be located on opposite sides of each other. For example, the positive tab 102' may be located on one side (upper side) of the electrode assembly 100' toward the cover portion 300' and may be fixed to the cover portion 300'. The negative tab 101' may be located on one side (lower side) of the electrode assembly 100' toward the bottom portion 301' of the can 200' and may be fixed to the bottom portion 301'.

A first insulation plate 151 may be located between the electrode assembly 100' and the cover portion 300', and a second insulation plate 152 may be located between the electrode assembly 100' and the bottom portion 301' of the can 200'. The first insulation plate 151 prevents or reduces instances of the negative plate of the electrode assembly 100' contacting the cover portion 300', and the second insulation plate 152 may prevent or reduce instances of the positive plate of the electrode assembly 100' contacting the can 200'.

The first insulation plate 151 may have a hole communicating with the inside of the center pin 134, a hole for the passage of the positive tab 102', and multiple holes for injecting electrolyte. The second insulation plate 152 may have a hole communicating with the inside of the center pin 134 and a hole for the passage of the negative tab 101'.

The cover portion 300' may include a vent 400' that also functions as a cap-up, a cap-down 30 located on one side (lower side) of the vent 400' toward the electrode assembly 100', and a connecting member 40 located between the vent 400' and the cap-down 30. The cover portion 300' may further include an insulating gasket 50 that insulates the vent 400' from the side portion 302' of the can 200'. The insulating gasket 50 surrounds the edge of the vent 400' and may be compressed between the beading portion 123 and the crimping portion 124 of the can 200'.

The cover portion 300' of the cylindrical rechargeable battery 10' may include a first region 430' on one surface. The first region 430' may be an area where the average grain size of the metal microstructure has increased due to laser beam irradiation. The first region 430' may be a laser beam heat-affected zone where the microstructure of the metal has been coarsened by laser beam irradiation. The second region 440' may be an area surrounding the first region 430'.

Also, the cylindrical rechargeable battery 10' may include a notch portion on one surface of the cover portion 300'. The notch portion may include a circular notch. Also, it may include a notch part crossing the circular notch. However, this is just for example of the notch portion, and the shape of the notch portion is not limited.

Just like the prismatic rechargeable battery described with reference to FIGS. 1 to 9, the cylindrical rechargeable battery described with reference to FIGS. 10 and 11 may also be capable of adjusting the burst pressure of the vent using the first region.

Also, the shape of the rechargeable battery is not limited in using the first region to adjust the burst pressure of the vent. That is, the vent surface heat treatment using a laser beam in this disclosure may be applied to control the burst pressure not only in prismatic rechargeable batteries and cylindrical rechargeable batteries but also in rechargeable batteries of various shapes.

According to various aspects, the first direction D1 may be at an angle to the second direction D2 and or to the third direction D3. Alternatively or additionally, the third direction D3 may be at a first angle with the first direction D1 in the range from in the range from 10° to 80° (e.g., from 40° to 50°) and/or at a second angle to the second direction D2, wherein, preferably the second angle is more than the first angle and/or in the range from 45° to 135° (e.g., from 80° to 100°).

According to various aspects, the first direction D1 and one or more of the second direction D2 or the third direction D3 may be within a plane.

According to various aspects, a thickness of the vent in the first region may be less than in the second region, e.g., by at least 10 % (e.g., 25% or more, e.g., 50% or more) of the thickness of the second region and/or by at least 10 *µ*m (e.g., 20 *µ*m or more).

According to various aspects, the can may accommodate the electrode assembly in an internal space of the can.

According to some embodiments, a tensile strength and/or elongation strength of (e.g., the metal in) the first region is less than a tensile strength and/or elongation strength of (e.g., the metal in) the second region. For example, a rechargeable battery includes an electrode assembly, a can accommodating the electrode assembly in an internal space and including an opening at one side, and a cover portion coupled to the can at the opening, wherein the cover portion includes a vent comprising metal, and the vent includes a first region and a second region surrounding the first region, wherein the first region includes a first portion extending in a first direction, and a second portion extending in a second direction intersecting the first direction and crossing the first portion at an intersection area, and wherein a tensile strength and/or elongation strength of (e.g., the metal in) the first region is less than a tensile strength and/or elongation strength of (e.g., the metal in) the second region.

According to various aspects irradiating the vent with a laser beam may reduce a tensile strength and/or elongation strength of the metal. For example, a method of manufacturing a rechargeable battery includes preparing a vent comprising metal, irradiating the vent with a laser beam to reduce a tensile strength and/or elongation strength of the metal, coupling the vent to a cover portion, accommodating an electrode assembly in an internal space of a can, and coupling the cover portion to an opening of the can.

According to some embodiments, the vent may include a one or more concave surface portions delimiting the first region, preferably the first portion and/or the second portion, and preferably the third portion. For example, the concave surface portion may provide a notch and/or groove. For example, the concave surface portion may be formed by irradiation with a laser beam (e.g., laser beam irradiation).

While this disclosure has been described with reference to aspects of some embodiments and drawings, embodiments according to the present disclosure are not limited by them, and various modifications and variations are possible in the equivalent scope of the technical concept of this disclosure and the claims to be described below by those skilled in the art to which this disclosure pertains.

### DESCRIPTION OF SOME OF THE REFERENCE SYMBOLS

10, 10': Rechargeable battery
100, 100': Electrode assembly
101, 101': Negative tab
102, 102': Positive tab
200, 200': Can
201: Internal space
202, 202': Opening
300, 300': Cover portion
301, 301': Bottom portion
302, 302': Side portion
400, 400': Vent
410, 420: First surface, Second surface
430, 430': First region
431, 432, 433: First portion, Second portion, Third portion
434: Intersection area
440, 440': Second region
450: Notch portion
451, 452, 453: First notch, Second notch, Third notch
460: Groove portion
461, 462, 463: First groove, Second groove, Third groove
500: Laser beam irradiation possible area
LAS: Laser beam
T1: Negative terminal
T2: Positive terminal
C1: First current collector
C2: Second current collector

## Claims

1. A rechargeable battery (10, 10') comprising:
an electrode assembly (100, 100');
a can (200, 200') accommodating the electrode assembly (100, 100') in an internal space (201) and including an opening (202, 202') at one side; and
a cover portion (300, 300') coupled to the can (200, 200') at the opening (202, 202'),
wherein the cover portion (300, 300') comprises a vent (400, 400') comprising metal,
wherein the vent (400, 400') comprises a first region (430, 430') and a second region (440, 440') surrounding the first region (430, 430'),
wherein the first region (430, 430') comprises:
a first portion (431) extending in a first direction; and
a second portion (432) extending in a second direction intersecting the first direction and crossing the first portion (431) at an intersection area (434), and
wherein an average grain size of a microstructure of the metal in the first region (430, 430') is larger than an average grain size of a microstructure of the metal in the second region (440, 440').

2. The rechargeable battery (10, 10') as claimed in claim 1, wherein the metal comprises steel;
wherein, preferably, the microstructure of the metal in the first region (430, 430') and the microstructure of the metal in the second region (440, 440') have an austenitic structure.

3. The rechargeable battery (10, 10') as claimed in one of claims 1 to 2, wherein the first region (430, 430') further comprises:
a third portion (433) extending in a third direction intersecting the first direction and the second direction, respectively, and crossing the first portion (431) and the second portion (432) at the intersection area (434).

4. The rechargeable battery (10, 10') as claimed in one of claims 1 to 3, wherein the vent (400, 400') comprises a notch portion (450) on a first surface (410) facing the electrode assembly (100, 100');
wherein, preferably, the first region (430, 430') and the notch portion (450) are adjacent to each other.

5. The rechargeable battery (10, 10') as claimed in claim **4,** wherein the vent (400, 400') comprises a second surface (420) opposite to the first surface (410), and
the second surface (420) comprises a groove portion (460);
wherein, preferably, the groove portion (460) comprises:
a first groove (461) extending in the first direction; and
a second groove (462) extending in the second direction and crossing the first groove (461).

6. The rechargeable battery (10, 10') as claimed in claim 5, wherein the first region (430, 430') and the groove portion (460) are adjacent to each other.

7. The rechargeable battery (10, 10') as claimed in one of claim 4 to 6, wherein the notch portion (450) comprises:
a first notch (451) extending in the first direction; and
a second notch (452) extending in the second direction from an end portion of the first notch (451).

8. The rechargeable battery (10, 10') as claimed in one of claims 4 to 7, wherein the notch portion (450) and the groove portion (460) overlap.

9. The rechargeable battery (10, 10') as claimed in one of claims 1 to 8, wherein the first region (430, 430') is a laser beam heat-affected zone where the microstructure of the metal has been coarsened by laser beam irradiation.

10. A method of manufacturing a rechargeable battery (10, 10'), comprising:
preparing a vent (400, 400') comprising metal;
irradiating the vent (400, 400') with a laser beam to increase an average grain size of a microstructure of the metal;
coupling the vent (400, 400') to a cover portion (300, 300');
accommodating an electrode assembly (100, 100') in an internal space (201) of a can (200, 200'); and
coupling the cover portion (300, 300') to an opening (202, 202') of the can (200, 200').

11. The method of manufacturing the rechargeable battery (10, 10') as claimed in claim 10,
wherein the metal comprises steel;
wherein, preferably, the microstructure of the metal has an austenitic structure.

12. The method of manufacturing the rechargeable battery (10, 10') as claimed in claim 11,
wherein in case that irradiating the vent (400, 400') with a laser beam to increase the average grain size of the microstructure of the metal,
the laser beam is irradiated in a first direction and a second direction intersecting the first direction, and is irradiated overlappingly in a partial area;
wherein, preferably, in case that irradiating the vent (400, 400') with a laser beam to increase the average grain size of the microstructure of the metal, the laser beam is irradiated in a third direction intersecting the first direction and the second direction, respectively, and is irradiated overlappingly in the partial area.

13. The method of manufacturing the rechargeable battery (10, 10') as claimed in one of claims 10 to 12,
wherein the vent (400, 400') comprises a notch portion (450).

14. The method of manufacturing the rechargeable battery (10, 10') as claimed in claim 13,
wherein the notch portion (450) is located on a first surface (410) of the vent (400, 400'), and
wherein in case that irradiating the vent (400, 400') with a laser beam to increase the average grain size of the microstructure of the metal,
the laser beam is irradiated on a second surface (420) opposite to the first surface (410) of the vent (400, 400').

15. The method of manufacturing the rechargeable battery (10, 10') as claimed in claim 14,
wherein in case that coupling the cover portion (300, 300') to the opening (202, 202') of the can (200, 200'),
the first surface (410) of the vent (400, 400') is arranged to face the electrode assembly (100, 100').
